(19) Europäisches Patentamt / European Patent Office / Office européen des brevets

(11) **EP 3 802 161 B1**

(12) **FASCICULE DE BREVET EUROPEEN**

(45) Date de publication et mention de la délivrance du brevet:
**06.07.2022 Bulletin 2022/27**

(21) Numéro de dépôt: **19737177.6**

(22) Date de dépôt: **29.05.2019**

(51) Classification Internationale des Brevets (IPC):
***B60C 23/04*** *(2006.01)*

(52) Classification Coopérative des Brevets (CPC):
**B60C 23/0444; B60C 23/0447; B60C 23/0493**

(86) Numéro de dépôt international:
**PCT/FR2019/051276**

(87) Numéro de publication internationale:
**WO 2019/229389 (05.12.2019 Gazette 2019/49)**

(54) **ENVELOPPE PNEUMATIQUE EQUIPEE D'UN SYSTEME DE MESURE ET METHODE DE COMMUNICATION D'UN TEL ASSEMBLAGE**

REIFENMANTEL MIT EINEM DATENMESSENDEN SYTEM UND DESSEN DATENAUSTAUSCHVERFAHREN

TIRE TREAD EQUIPPED WITH A SYSTEM FOR MEASURING DATA AND METHOD OF COMMUNICATION OF SUCH SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2018 FR 1854569**

(43) Date de publication de la demande:
**14.04.2021 Bulletin 2021/15**

(73) Titulaire: **COMPAGNIE GENERALE DES ETABLISSEMENTS MICHELIN**
**63000 Clermont-Ferrand (FR)**

(72) Inventeurs:
• **FAGOT-REVURAT, Lionel**
**63040 CLERMONT-FERRAND Cedex 9 (FR)**

• **DESTRAVES, Julien**
**63040 CLERMONT-FERRAND Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
EP-A2- 0 601 739    WO-A1-01/12452
WO-A1-01/44000    WO-A1-2006/058918
WO-A1-2016/193457    FR-A1- 2 937 284
FR-A1- 3 041 285

**Description**

La présente invention concerne une enveloppe pneumatique avion équipée d'un dispositif électronique de surveillance de paramètre d'un ensemble monté permettant une interrogation à la demande, à distance, c'est-à-dire sans opérations physiques sur l'ensemble monté, et quelle que soit la position de l'opérateur par rapport à l'ensemble monté.

Ces dernières années, pour des raisons réglementaires, des modules de roue autour d'une technologie dite TPMS (acronyme en anglais de « Tire Pressure Monitoring System ») se sont développés permettant d'instaurer une communication avec l'ensemble monté pour prévenir les risques d'accident en cas, par exemple, d'une perte de pression de gonflage de l'ensemble monté. Ce sont des dispositifs électroniques de type actif comprenant d'une part des capteurs mesurant des paramètres de l'ensemble monté comme par exemple la pression de gonflage ou la température du fluide pressurisé contenu entre l'enveloppe pneumatique et la jante et d'autre part des moyens de communication radiofréquences avec une source d'énergie dédiée pour dialoguer avec le véhicule ou une unité de contrôle. Ces modules de roue comprennent aussi généralement une puce électronique et un espace mémoire afin de gérer, post traiter ou stocker des grandeurs du composant ensemble monté.

Ces modules de roue, embarqués sur l'un des composants de l'ensemble monté comme par exemple la jante ou l'enveloppe pneumatique, voient leurs fonctionnalités augmentées régulièrement. Les derniers développements, généralement autour de la technologie TMS (acronyme en anglais de « Tire Mounted Sensor ») proposent de déporter tout ou partie de ce module de roue vers le bloc sommet de l'enveloppe pneumatique.

Cependant, dans le domaine de l'aviation, les sollicitations thermomécaniques élevées subies par les ensembles montés au moment des phases de décollage et d'atterrissage ainsi que les contraintes réglementaires liées à cette activité rendent complexes l'exploitation de systèmes électroniques alimentés par batterie du fait des éléments mobiles présents dans les batteries. D'une part, ces contraintes mécaniques telles que celles générées par les chocs d'impact à l'entrée ou la sortie de l'aire de contact à haute vitesse, engendrent une détérioration prématurée et non maitrisée de ces composants mobiles. D'autre part il faut s'assurer que l'intégration de ces systèmes électroniques ne soit pas dommageable à l'endurance de l'ensemble monté et tout particulièrement à l'enveloppe pneumatique. De ce fait, il faut optimiser l'intégration de ce système électronique au sein de l'ensemble monté.

En outre, les contraintes thermiques violentes liées au freinage rendent la température inhomogène au sein de l'ensemble monté. De ce fait la mesure de la température de la cavité fluide de l'ensemble monté est fortement influencée par la localisation du capteur par rapport à ces sources de chaleur. Par exemple, la mesure de la température à l'aide d'un système TPMS monté sur la valve de jante est fortement perturbée par réchauffement de la roue lors de la phase de freinage.

La pression de gonflage des ensembles montés pour l'aviation est très élevée. De ce fait, les opérations manuelles de maintenance de l'ensemble monté sont délicates en raison des risques d'éclatement de l'enveloppe pneumatique en cas de mauvaise manipulation.

Enfin, afin de faciliter l'exploitation de tel système de mesure des paramètres de l'ensemble monté, la communication des deux côtés de l'ensemble monté suivant la direction de l'axe de rotation de l'enveloppe pneumatique est nécessaire et ce quelle que soit la position d'arrêt de l'ensemble monté .

Le problème technique à résoudre consiste à définir une enveloppe pneumatique équipée d'un système électronique de radiocommunication qui soit compatible avec les contraintes thermomécaniques de l'ensemble monté et les contraintes réglementaires de l'aviation tout en permettant une communication aisée à tout moment et à distance du système électronique.

L'invention porte sur un arrangement comprenant une enveloppe pneumatique définissant à l'aide d'une roue un ensemble monté, un dispositif électronique de mesure de paramètre de l'ensemble monté et une interface de liaison en matériau élastomère servant d'interface entre l'enveloppe pneumatique et le dispositif électronique et recouvrant partiellement le dispositif électronique. Le dispositif électronique de mesure comprend:

- une antenne radiofréquence UHF définissant un axe polaire et

- une carte électronique comprenant :

    - une puce électronique couplée électriquement à l'antenne radiofréquence UHF par au moins une ligne galvanique de transmission ;et

    - au moins un capteur de mesure de paramètre de l'ensemble monté ;

L'enveloppe pneumatique comprend :

- un sommet, deux flancs et deux bourrelets de révolution autour d'un axe de référence définissant une première surface située extérieurement et une deuxième surface située intérieurement à l'enveloppe pneumatique par rapport à l'axe de référence, et

- un plan médian perpendiculaire à l'axe de référence et équidistant des deux bourrelets.

L'arrangement est **caractérisé en ce que** l'interface de liaison est fixée au droit du sommet sur la deuxième surface de l'enveloppe pneumatique et en ce qu'un point d'alimentation, défini comme l'intersection entre l'axe polaire et de la au moins une ligne de transmission, est situé axialement dans la zone centrale du sommet de l'enveloppe pneumatique.

L'arrangement permet de communiquer par l'intermédiaire d'un dispositif radiofréquence UHF (acronyme de Ultra Hautes Fréquences) émetteur /récepteur situé à distance de l'ensemble monté. La bande UHF est le meilleur compromis possible entre une faible dimension de l'antenne radiofréquence UHF et une distance de lecture radiofréquence convenable. De surcroit la faible dimension de l'antenne radiofréquence, de l'odre de quelques centimètres de long, facilite son intégration au sein de l'ensemble monté et en particulier dans l'enveloppe pneumatique sans préjudice notable sur l'endurance des diverses structures. De plus, l'insertion de l'antenne radiofréquence dans une interface de liaison en mélange élastomère permet un changement de la vitesse de propagation des ondes radioélectriques par rapport au vide amenant à une réduction de la longueur utile de l'antenne radiofréquence du dispositif électronique de mesure. Ce dispositif radiofréquence comprend un émetteur radiofréquence à destination du dispositif électronique de mesure et un récepteur radiofréquence à son écoute. Ces deux fonctions peuvent être confondues dans un même instrument de communication. Ce dispositif radiofréquence UHF émet des ondes radioélectriques dans la bande de fréquence UHF comprise entre 300 MHz et 3 GHz, et tout particulièrement les fréquences d'environ 430 MHz et comprises entre 860 et 960 MHz, qui sont réceptionnées par l'antenne radiofréquence UHF du dispositif électronique de mesure.

L'énergie radioélectrique captée est ensuite transmise en énergie électrique à la puce électronique pour activer la carte électronique. L'utilisation d'un couplage électrique entre l'antenne radiofréquence et la puce électronique optimise le rendement du transfert de puissance entre ces composants contrairement à des solutions de couplage électromagnétique tel que l'induction dont les rendements sont plus faibles.

Le dispositif électronique de mesure ne comprend pas de batterie ou d'accumulateur d'énergie et il satisfait en cela aux contraintes du problème technique que l'invention cherche à résoudre.

Enfin, la communication émettrice de la puce électronique est de type passif, sans source d'énergie. Le signal émetteur est réfléchi et modulé à partir du signal réceptionné par l'intermédiaire d'une variation d'impédance de la puce électronique.

Le positionnement de l'interface de liaison au droit du sommet permet d'assurer l'intégrité de l'enveloppe pneumatique. En effet, le sommet est une zone rigide et massive de l'enveloppe pneumatique dimensionnée pour supporter les contraintes thermomécaniques sévères générées par le contact entre l'enveloppe pneumatique et la chaussée, l'intégration d'une interface de liaison en matériau élastomère ne perturbe pas mécaniquement ni thermiquement le sommet.

On entend ici par le terme « zone centrale du sommet de l'enveloppe pneumatique », une zone correspondant à 25% de la largeur de l'enveloppe pneumatique qui est centré sur le plan médian de l'enveloppe pneumatique. La largeur de l'enveloppe pneumatique est obtenue à l'aide des caractéristiques dimensionnelles et normatives de l'enveloppe pneumatique inscrites sur la surface externe de ses flancs.

Le positionnement du point d'alimentation de l'antenne radiofréquence UHF au sein de la zone centrale du sommet assure une communication par le dispositif radiofréquence des deux côtés de l'enveloppe pneumatique sans privilégier un côté par rapport à l'autre. Cette communication par les deux flancs de l'enveloppe pneumatique est réalisable quelle que soit la position azimutale ou radiale du dispositif électronique par rapport à l'enveloppe pneumatique. En particulier, même si la position azimutale du dispositif électronique est contenue dans la variation angulaire de l'enveloppe pneumatique en contact avec le sol, communément nommée » aire de contact », il sera possible de communiquer avec le dispositif radiofréquence par les deux côtes de l'enveloppe pneumatique.

Selon un mode de réalisation particulier, la carte électronique comprend en plus un microcontroleur, un élément capacitif et un gestionnaire d'énergie. L'ensemble des composants de la carte électronique sont des composants à basse consommation.

La puce électronique, le microcontrôleur et le capteur de mesure de paramètre de l'ensemble monté sont dans notre cas des composants à basse consommation d'énergie permettant d'optimiser l'énergie de la carte électronique. On entend ici par le terme « basse consommation » que leur énergie d'activation est faible. En outre leur mode de veille minimise les courants de fuite et leur durée de fonctionnement est faible. De plus la puce électronique optimise le transfert d'énergie vers la carte électronique par l'intermédiaire d'un gestionnaire d'énergie. Celui-ci pilote la charge et la décharge d'un élément capacitif stockant une certaine quantité d'énergie sans avoir les inconvénients structurels d'une batterie. Cependant la quantité d'énergie stockée est généralement plus faible que dans une batterie. Le gestionnaire d'énergie libère l'énergie dans la carte électronique lorsqu'un certain niveau seuil de stockage est atteint dans l'élément capacitif. Cette libération d'énergie réveille, dans le cadre de ce mode de réalisation, les composants de la carte électronique éteints et lance alors la séquence de mesure. En outre le capteur de mesure optimise sa consommation énergétique par l'intermédiaire du microcontrôleur.

Avantageusement un convertisseur analogique/numérique est employé entre le microcontrôleur et le capteur de mesure pour transformer l'information numérique en une information analogique à destination ou provenant du capteur de mesure de type analogique. L'information numérique recueillie est transmise ensuite dans l'espace mémoire de la puce électronique avant d'être transmise par modulation d'impédance à l'antenne radiofréquence UHF. Celle-ci transforme le signal électrique en un signal radiofréquence d'émission vers le dispositif récepteur radiofréquence.

Selon un mode de réalisation très particulier, le dispositif électronique de mesure comprend un plan de masse relié à la carte électronique

Cette configuration permet de mettre l'ensemble des composants de la carte électronique à une même référence de tension. Cela permet de minimiser les perturbations parasites sur la globalité de la carte électronique limitant ainsi le bruit de fond sur les mesures du dispositif électronique et de faire fonctionner, par exemple, la carte électronique à un niveau d'énergie plus faible.

Avantageusement, le point d'alimentation de l'antenne radiofréquence UHF est situé dans le plan médian de l'enveloppe pneumatique.

Dans ce cas précis, l'équidistance de l'antenne radiofréquence par rapport aux bourrelets de l'enveloppe pneumatique et de ce fait des deux flancs assure une communication équivalente des deux côtés de l'enveloppe pneumatique à iso environnement extérieur potentiellement perturbateur.

Selon un mode de réalisation préférée, l'enveloppe pneumatique comprend un indicateur visuel situé sur la première surface de l'enveloppe pneumatique au droit de l'un des flancs. L'interface de liaison est localisée sur un azimut éloigné de l'azimut de l'indicateur visuel de moins de 15 degrés, de préférence de moins de 5 degrés et très préférentiellement les deux azimuts sont alignés.

La présence de cet indicateur visuel sur la partie visible de l'extérieur de l'enveloppe pneumatique permet à l'opérateur de localiser la meilleure zone de communication avec le dispositif électronique. Bien que l'alignement des deux azimuts soit la configuration préférée, l'enveloppe pneumatique demeure un objet industriel ayant ses propres contraintes notamment normatives sur le marquage des flancs extérieurs, il est toléré un décentrage des deux azimuts sans que cela ne modifie la capacité de communication entre un dispositif radiofréquence extérieur à l'ensemble monté et le dispositif électronique de l'arrangement. De plus, cet indicateur visuel peut contenir des informations sur la direction de l'axe polaire de l'antenne radiofréquence UHF. Cela permet d'optimiser le couplage radioélectrique entre le dispositif émetteur/récepteur externe à l'ensemble monté et l'antenne radiofréquence du dispositif électronique en alignant le champ électrique émetteur avec les lignes équipotentielles du dispositif récepteur.

Selon un mode de réalisation particulier, l'antenne radiofréquence UHF est une antenne mono bande de type dipôle demi-onde dont la longueur totale L est comprise entre les bornes suivantes :

$$0,9*C/(2*f) < L < 1,1*C/(2*f)$$

dans lequel, C est la célérité des ondes radioélectriques dans le milieu où est noyé l'antenne radiofréquence UHF (20) et f est la fréquence de communication de l'antenne radiofréquence UHF (20).

Parmi les antennes radiofréquences UHF, l'antenne dipôle demi onde est une antenne de conception élémentaire et bon marché composée principalement par au moins deux brins coaxiaux alignés sur l'axe de l'antenne dont l'une de leurs extrémités est jointe ensemble au niveau du point d'alimentation de l'antenne et s'éloignant l'un de l'autre. De plus, l'intégration de cette antenne de conception élémentaire dans l'enveloppe pneumatique est facilitée par rapport à des antennes directionnelles ou multi bandes. La longueur totale L de l'antenne correspond à la demi-longueur d'onde de l'antenne radiofréquence. Lorsque l'antenne est mono bande, la fréquence d'utilisation de l'antenne est fixée sur une fréquence centrale avec une largeur de bande étroite. Cela permet de focaliser l'énergie sur un spectre de fréquences étroit maximisant le transfert énergétique entre le dispositif radiofréquence UHF et l'antenne radiofréquence aussi bien en émission qu'en réception. Si la puissance rayonnée vers ou au départ de l'antenne radiofréquence est limitée, ce type de conception est adapté pour transférer le maximum d'énergie rayonnée. Enfin l'antenne dipôle demi-onde permet de rayonner dans un large espace autour de l'antenne aussi bien en émission qu'en réception, c'est une antenne dite omnidirectionnelle. De ce fait, elle est bien adaptée à l'utilisation sur un ensemble monté du fait de la position angulaire aléatoire de l'antenne radiofréquence par rapport au repère terrestre et de la position aléatoire du dispositif radiofréquence UHF par rapport à l'ensemble monté.

Il est à noter que les ondes radioélectriques se déplacent à des vitesses qui dépendent de la nature, en particulier diélectrique, du milieu où l'antenne de communication est localisée. Ainsi, l'antenne radiofréquence du système de mesure étant englobée dans une interface en mélange élastomère, une valeur moyenne de permittivité diélectrique de 5 est pris en compte pour déterminer la célérité C des ondes radioélectriques.

Selon un mode très particulier de réalisation, l'antenne dipôle demi onde est constituée par au moins deux brins dont la longueur du chemin parcouru L0 le long de chaque brin est comprise entre les bornes suivantes :

$$0,5*C/(4*f) < L0 < 2,0*C/(4*f)$$

dans lequel, C est la célérité des ondes radioélectriques dans le milieu où est noyé le brin et f est la fréquence de communication de l'antenne radiofréquence UHF.

Bien qu'une antenne dipôle demi onde fonctionne sur une fréquence centrale gouvernée par la demi longueur d'onde, l'intégration dans une enveloppe pneumatique d'une antenne dipôle demi-onde cause des perturbations au fonctionnement radiofréquence de l'antenne. En fait la longueur d'onde de l'antenne est à la fois pilotée par la fréquence centrale mais aussi le coefficient de célérité des ondes dans le milieu où l'antenne est noyée. Or, les mélanges élastomères dont est compris l'interface de liaison mais aussi l'enveloppe pneumatique ont une influence notable sur ce coefficient de célérité en modifiant en particulier la permittivité relative du milieu où se trouve l'antenne radiofréquence. Bien entendu, selon la composition chimique des mélanges élastomères ou des tissus constitués de ces mélanges élastomères, en particulier le taux de noir de carbone, la permittivité diélectrique relative par rapport au vide du milieu change. En raison de l'hétérogénéité des mélanges employés pour l'interface de liaison et au sein de l'enveloppe pneumatique, de leur géométrie et de la diversité des localisations possibles du système de mesure dans l'enveloppe pneumatique, la gamme de valeur de la longueur du chemin parcouru dans chaque brin de l'antenne est large pour s'adapter à toutes les situations. Dans ce cas, une permittivité relative moyenne pour les mélanges élastomères est prise comme référence, une valeur d'environ 5 est alors définie.

Avantageusement, un brin de l'antenne dipôle demi-onde est compris dans le groupe comprenant linéique, méandre, courbe, hélicoïdal.

Ce sont divers modes de conception du brin de l'antenne dipôle demi-onde. Le plus classique est le brin linéique qui présente le plus faible encombrement spatial en raison de son caractère monodimensionnel. Il permet d'optimiser le transfert énergétique entre l'énergie radioélectrique échangée avec le dispositif radiofréquence et l'énergie électrique transmise à l'antenne radiofréquence. En effet, le rendement est optimal si la totalité de la longueur du brin est parfaitement alignée avec le champ électrique généré par les ondes radioélectriques. Cependant c'est un brin fragile pour des sollicitations mécaniques transverses à la direction du brin. Enfin c'est un brin encombrant dans sa dimension principale par rapport aux dimensions de l'enveloppe pneumatique ne facilitant que moyennement son intégration à cet objet surtout si celui-ci est de petite dimension.

Les solutions de type méandre et courbe rendent compactes le brin en terme de longueur au détriment d'un allongement dans la seconde direction du plan de l'antenne. En effet, ce sont des brins bidimensionnels dont la dimension dans la direction normale au plan du brin est faible par rapport aux autres dimensions du plan du brin. Ces formes facilitent naturellement l'intégration du brin au sein de l'enveloppe pneumatique. De ce fait, l'endurance mécanique de l'enveloppe pneumatique et de l'antenne radiofréquence s'en trouvent améliorée. Cependant, cette amélioration est au détriment du rendement énergétique en raison du non-alignement de la totalité du brin avec la direction du champ électrique générée par les ondes radioélectriques.

Enfin le brin hélicoïdal est un élément structurel tridimensionnel bien adapté pour absorber les déformations thermomécaniques subies par l'enveloppe pneumatique et ce quelle que soit la direction de la sollicitation, assurant ainsi une bonne endurance mécanique de l'antenne radiofréquence et facilitant le positionnement de l'antenne dans l'enveloppe pneumatique. De plus, la compacité du brin obtenue par la troisième dimension facilite l'intégration de l'antenne radiofréquence dans l'enveloppe pneumatique en particulier pour les enveloppes pneumatiques de petite dimension. Cependant, cette compacité est au détriment du rendement du transfert énergétique. Enfin, c'est une antenne complexe en ce qui concerne sa réalisation et son intégration à une carte électronique qui est par nature bidimensionnelle.

En résumé, selon les dimensions de l'enveloppe pneumatique rendant plus ou moins facile l'intégration du brin, la consommation énergétique du dispositif de mesure et le choix d'implantation du dispositif de mesure dans l'enveloppe pneumatique, il convient de préférer une conception de brin plus qu'une autre. Cependant, il est tout à fait possible de combiner des formes différentes sur le même brin et d'avoir des formes de brin différentes entre les divers brins de l'antenne dipôle demi-onde.

Selon un mode de réalisation spécifique, l'antenne dipôle comprend un brin replié formant une boucle dont le demi-périmètre D du brin défini par la direction de l'antenne radiofréquence UHF, définissant le chemin parcouru L0, est comprise entre les bornes suivantes :

$$0{,}5*C/(4*f) < D < 2{,}0*C/(4*f)$$

où C est la célérité des ondes radioélectriques dans le milieu où le brin est noyé et f est la fréquence de communication de l'antenne radiofréquence UHF.

C'est un autre mode de réalisation d'un brin de l'antenne dipôle demi-onde. C'est un élément structurel bidimensionnel puisque la dimension de la boucle dans la direction normale à la boucle est faible devant les autres dimensions principales de la boucle. Le demi-périmètre est défini à l'aide des points géométriques de la boucle qui se situent à l'intersection de la direction de l'antenne radiofréquence UHF avec la boucle. En raison de l'hétérogénéité des mélanges élastomères de l'interface de liaison et d'une enveloppe pneumatique, de la position du dispositif de mesure par rapport à l'interface de liaison et des diverses positions d'insertion du système de mesure dans l'enveloppe pneumatique, il convient de régler précisément la longueur D au cas par cas pour optimiser l'échange d'énergie entre la puissance rayonnée par le dispositif radiofréquence et l'antenne radiofréquence. Cependant une valeur définie dans l'interface proposée permet d'assurer une quantité d'énergie suffisante pour que le système de mesure fonctionne.

Selon un mode de réalisation très spécifique, la boucle du brin a une forme compris dans le groupe comprenant cercle, ellipse, ovale, rectangle, losange, carré et polygone.

Quelle que soit la forme de la boucle, elle permet de réaliser une boucle fermée définissant un périmètre. Ainsi, on peut adapter la forme de la boucle aux contraintes géométriques du dispositif électronique. En particulier, la proximité de l'antenne rayonnante avec la carte électronique peut influer sur l'espace disponible pour définir la boucle du brin de l'antenne rayonnante. Afin de constituer un dispositif électronique le plus compact possible pour optimiser l'endurance mécanique du dispositif électronique et de l'enveloppe pneumatique devant le recevoir, le concepteur optera pour une architecture de brin particulière en prenant en compte les coûts et les contraintes de fabrication du tel brin.

Selon un autre mode de réalisation très particulier, la boucle de demi-périmètre D est intégrée dans le plan de masse du circuit électrique.

La dimension du plan de masse permet de réaliser la boucle de demi périmètre D sur le plan de masse comme brin de l'antenne dipôle. Cette structure de brin améliore la tenue mécanique du brin de l'antenne et de surcroît minimise les coûts de fabrication de l'antenne dipôle.

Avantageusement, un chemin orienté L1 du brin représentant au moins 50% du chemin parcouru L0 du au moins un brin est orienté dans la direction de l'antenne radiofréquence UHF.

Si la longueur du chemin parcouru L0 permet de centrer la fréquence de résonance de l'antenne rayonnante sur la fréquence centrale du dispositif radiofréquence en communication avec elle, il est aussi possible d'améliorer l'efficacité énergétique du transfert entre ces deux structures en alignant l'axe de l'antenne rayonnante avec le champ électrique du dispositif radiofréquence. Bien entendu, l'efficacité est maximale si le champ électrique du dispositif radiofréquence est constant et que l'antenne rayonnante est parfaitement alignée. Cependant si 50% de la longueur du brin est alignée, le rendement est suffisant pour que le dispositif électronique fonctionne. C'est un compromis entre l'efficacité du transfert énergétique depuis le dispositif radiofréquence vers le dispositif électronique et l'endurance mécanique de l'antenne rayonnante insérée dans une enveloppe pneumatique.

Très avantageusement, un chemin orienté optimal L2 représentant au moins 70%, préférentiellement 80%, du chemin orienté L1 du brin est continu. De plus, le chemin orienté optimal L2 est localisé dans la partie du brin comprenant le point d'alimentation de l'antenne radiofréquence.

Ces caractéristiques distinctives ont des effets similaires et additionnels sur le transfert énergétique entre l'antenne rayonnante et le dispositif radiofréquence. En effet, ces caractéristiques augmentent l'interaction entre le champ électrique du dispositif radiofréquence et l'intensité du courant électrique circulant dans l'antenne rayonnante, ce courant communiquant directement avec le circuit électrique du dispositif électronique.

Selon un mode de réalisation spécifique, une partie de la carte électronique, du plan de masse et de l'antenne radiofréquence UHF sont enrobés dans une masse en parylène.

Certains composants de la carte électronique tels que les capteurs de mesure peuvent nécessiter d'être en contact avec le fluide extérieurement délimité par le système de mesure. Or ce fluide n'est pas parfait par nature. Le fluide peut avoir un taux d'humidité variable mais aussi des saletés ou des impuretés pouvant influencer la réponse du capteur de mesure. De même, l'antenne rayonnante et le plan de masse du système de mesure peut être en contact direct avec ce fluide et subir les mêmes types d'agressions physico chimiques. Pour ces raisons, la protection hermétique apportée par le parylène est efficace.

Les éléments du système de mesure sont fragiles de par leur structure elle-même et les connexions entre ses éléments sont des points de fragilité. Le système de mesure à vocation à être inséré dans une enveloppe pneumatique avion dont les sollicitations thermomécaniques sont élevées. Le parylène apporte aussi une protection mécanique à ses composants bien que ce ne soit pas son premier rôle.

Selon un mode de réalisation préférentiel, l'antenne radiofréquence UHF est connectée à un circuit d'adaptation d'impédance situé entre l'antenne radiofréquence UHF et la puce électronique.

Le circuit d'adaptation d'impédance améliore le transfert de puissance entre l'antenne radiofréquence UHF et la puce électronique en minimisant les pertes de puissance entre ces deux composants. Cela permet d'augmenter réellement la puissance électrique transmise à la puce électronique et donc la carte électronique. Cette adaptation est particulièrement nécessaire en cas de déséquilibre de l'antenne rayonnante comme le cas où les deux brins du dipôle demi-onde sont de conception différente. Elle permet d'équilibrer l'antenne rayonnante et d'adapter l'impédance de l'antenne rayonnante à la puce électronique. Cette adaptation est réalisée à l'aide de circuits idéalement purement capacitifs, résitifs ou inductifs mis en combinaison entre eux selon le besoin d'adaptation.

Selon un mode de réalisation particulier, l'interface de liaison est équipée d'un orifice traversant mettant en communication le fluide situé extérieurement au système de mesure et au moins une zone active du au moins un capteur de mesure de paramètre de l'ensemble monté.

En effet, si le capteur de mesure de l'ensemble monté s'intéresse aux propriétés chimio physiques de la cavité fluide pressurisée formée par l'ensemble monté telle que la pression de gonflage, il faut que ces capteurs soient en connexion avec cette cavité fluide. L'interface de liaison s'intercalant entre l'enveloppe pneumatique et le dispositif électronique, l'orifice permet de mettre en communication la partie active du capteur de mesure avec la cavité fluide.

Selon un autre mode de réalisation particulier, le capteur de mesure de paramètre de l'ensemble monté est compris dans le groupe comprenant capteur de pression, capteur de température, capteur de position verticale, capteur de position angulaire, un accéléromètre.

Parmi les capteurs de mesure des paramètres de l'ensemble monté, les plus usuellement employés sont les capteurs de pression et de température puisqu'ils s'intéressent directement à des grandeurs physiques en lien direct avec l'usage et le bon fonctionnement de l'ensemble monté ou de l'enveloppe pneumatique. Les capteurs de température mesurent soit la température du fluide de la cavité interne de l'ensemble monté ou soit la température de certaines zones spécifiques de l'enveloppe pneumatique. Cependant d'autres capteurs de mesure tels que les accéléromètres, les capteurs de position peuvent aussi être employés afin d'aider au diagnostic du bon usage de l'ensemble monté ou de l'enveloppe pneumatique ou de l'état de l'ensemble monté au moment de la prise de mesure par un autre capteur.

Selon un mode de réalisation préférentiel, l'axe polaire de l'antenne radiofréquence UHF est parallèle à la direction circonférentielle de l'enveloppe pneumatique.

Dans ce mode de réalisation, l'axe polaire est aligné avec la direction circonférentielle de l'enveloppe pneumatique. Ainsi la communication radioélectrique avec le dispositif émetteur récepteur externe est constante quelle que soit la position radiale du dispositif émetteur récepteur situé au niveau du flanc. En effet, le champ rayonné par l'antenne radiofréquence ne présente aucune zone d'ombre dans la direction perpendiculaire à l'axe polaire. De plus, il est possible d'orienter l'antenne du dispositif émetteur récepteur externe pour aligner son axe polaire avec l'axe polaire de l'antenne radiofréquence du dispositif électronique. Ce mode de réalisation avantageux pour le transfert énergétique entre le dispositif électronique et le dispositif émetteur recepteur est néfaste en ce qui concerne l'intégrité mécanique du dispositif électronique. En effet, l'alignement de l'axe polaire de l'antenne radiofréquence avec la direction circonférentielle de l'enveloppe pneumatique conduit à solliciter en flexion la dite antenne radiofréquence lors des passages de celle-ci dans l'aire de contact. De plus, si le plan de masse du dispositif électronique est un élément de l'antenne, le risque de détérioration de celui-ci est accentué en raison de la géométrie et de la matière de ce composant. Le meilleur compromis mécano énergétique est de positionner le dispositif électrronique dans un plan parrallèle au plan médian de l'envelope pneumatique. En conclusion cette solution fonctionne pour des arrangements comprenant toute dimension d'enveloppe pneumatique. En particulier pour les enveloppes de grand diamètre pour lesquelles, les zones d'entrée et de sortie de l'aire de contact seront moins sollicitantes pour le dispositif électronique, cette intégration est bien adaptée.

Selon un autre mode de réalisation préférentiel, l'axe polaire de l'antenne radiofréquence UHF est parallèle à l'axe de référence de l'enveloppe pneumatique.

Dans cette configuration, l'antenne radiofréquence n'est pas soumise à des sollicitations de flexion conduisant à améliorer l'intégrité physique du dispositif électronique et de l'antenne radiofréquence en particulier. Cependant, la direction de l'axe polaire conduit à une zone d'ombre de communication sur le côté de l'enveloppe localisé dans la partie haute du flanc. De ce fait, la communication avec le dispositif émetteur/récepteur externe à l'ensemble monté se trouve altérée. En conclusion, cette caractéristique est à favoriser pour les enveloppes pneumatiques de grand diamètre pour lesquelles les sollicitations mécaniques à l'entrée et la sortie de l'aire de contact sont plus fortes. De plus, la dimension du diamètre de l'enveloppe est souvent corrélée avec la largeur de l'enveloppe pneumatique. De ce fait, ces enveloppes pneumatiques présentent une zone d'ombre de communication radioélectrique plus petite que les enveloppes de petits dimension.

L'invention porte aussi sur un procédé de communication entre un ensemble monté comprenant d'un tel assemblage et un dispositif radiofréquence externe comprenant une antenne radiofréquence présentant un axe polaire comprenant les étapes suivantes :

- Positionner radialement le dispositif radiofréquence externe à une distance R par rapport à l'axe de référence de l'enveloppe pneumatique comprise entre le tiers et la hauteur totale de l'enveloppe pneumatique ;

- Approcher axialement, au droit de l'un des flancs de l'enveloppe pneumatique, l'axe polaire de l'antenne radiofréquence du dispositif radiofréquence externe à une distance D0 par rapport à la première surface de l'enveloppe pneumatique définissant une première position de lecture ; et

- Démarrer une émission radioélectrique par le dispositif radiofréquence externe pendant une durée T0 en balayant angulairement un premier secteur angulaire $\beta$ de $\alpha$ degrés.

Le protocole de communication avec l'arrangement est défini tout d'abord par le positionnement du dispositif radiofréquence externe par rapport à l'enveloppe pneumatique. Celui-ci est placé extérieurement et au droit du flanc du pneumatique sur la partie haute du flanc, loin de la roue. Ceci est fait pour éloigner le dispositif radiofréquence d'une zone de perturbation magnétique lorsque la roue est métallique. Et, de plus, le dispositif électronique de l'arrangement se trouve au droit du sommet et à l'intérieur de la cavité interne de l'ensemble monté, on émet plus d'énergie vers le dispositif électronique en localisant le dispositif radiofréquence externe sur la partie haute du flanc. Peu importe la position azimutale du dispositif radiofréquence par rapport à l'enveloppe pneumatique.

Ensuite le protocole de communication se caractérise par la séquence d'émission radioélectrique.

Celle-ci comprend plusieurs paramètres essentiels. Tout d'abord une durée T0 d'émission pendant lequel le dispositif radiofréquence externe émet en continu des ondes radioélectriques à destination du dispositif électronique. Et, une action de balayage angulaire du dispositif radiofréquence externe, et ce quelle que soit l'animation de ce balayage, pour couvrir un secteur angulaire β de α degrés représentant une partie de l'enveloppe pneumatique. Le premier paramètre permet d'une part de transférer l'énergie nécessaire au dispositif électronique pour effectuer la mesure et la transmettre en retour. Le second paramètre permet, en l'absence d'indication sur la localisation du dispositif électronique de couvrir une zone spatiale importante de l'enveloppe pneumatique.

Avantageusement, en cas d'absence de réponse de la part du dispositif électronique vers le dispositif radiofréquence externe, il convient d'effectuer une ou plusieurs étapes complémentaires suivantes :

- Déplacer angulairement le dispositif radiofréquence externe de α degrés par rapport à la première position de lecture ;

- Réduire par un facteur ρ la distance D0 entre l'axe polaire du dispositif radiofréquence externe et la première surface de l'enveloppe pneumatique ;

- Réduire par un facteur de réduction μ l'angle de balayage α

- Augmenter par un facteur multiplicateur ρ la durée T0 d'émission radioélectrique.

L'absence de réponse de la part du dispositif électronique peut provenir tout d'abord d'un problème de couverture spatiale des signaux radioélectriques émetteurs. En effet, les signaux émis sont régis par des contraintes réglementaires concernant l'énergie émettrice maximale. De ce fait, l'efficacité de la communication est limitée à une portion de l'enveloppe pneumatique représentant un secteur angulaire donné fonction de la distance D0 entre le dispositif radiofréquence et l'enveloppe pneumatique, de la quantité d'énergie nécessaire au dispositif électronique pour effectuer ses tâches En l'absence d'indication sur la localisation azimutale du dispositif électronique dans l'arrangement, il se peut que la couverture angulaire effectuée par l'opérateur ne soit pas suffisante. Pour pallier à ces difficultés, il est proposé soit de réduire la distance D0 du dispositif radiofréquence externe, soit de changer l'azimut de position du dispositif radiofréquence externe.

Ensuite, il se peut aussi que l'exposition temporelle aux signaux radioélectriques ne soit pas suffisante pour transmettre l'énergie suffisante au dispositif électronique pour effectuer d'une part la mesure demandée et d'autre part la transmettre. Ce problème d'exposition temporelle provient potentiellement d'une mauvaise adéquation entre la couverture angulaire effectuée par les signaux radioélectriques émetteurs et l'antenne radiofréquence du dispositif électronique. Il peut être aussi la cause d'une durée T0 d'iémission insuffisante pour effectuer le protocole de mesure du dispositif électronique ou recharger suffisamment l'élément capacitif du dispositif électronique. De ce fait, la réduction de l'angle de balayage α ou l'augmentation de la durée d'émission T0 sont deux bras de levier pour pallier à ces inconvénients.

Bien entendu, le problème de non réponse du dispositif électronique peut aussi être la conséquence d'une combinaison de ces problèmes et il faut alors combiner les solutions techniques pour obtenir la réponse souhaitée.

Selon un mode de réalisation privilégié, la distance D0 entre l'axe polaire du dispositif radiofréquence externe et la première surface de l'enveloppe pneumatique entre comprise entre 0 et 1 mètre. Toutefois, il est préférable d'utiliser une borne haute de 70 centimètres et très préférentiellement de 50 centimètres pour limiter les risques de non réponses du dispositif électronique lors du mode d'interrogation. Bien entendu, si la distance D0 est nulle, l'éloignement entre les composants est réduit ce qui améliore nécessairement le transfert énergétique radiofréquence entre les deux composants à iso condition d'interrogation.

Selon un autre mode de réalisation privilégié, si l'enveloppe pneumatique de l'arrangement dispose d'un indicateur visuel renseignant l'opérateur sur la localisation azimutale du dispositif électronique, il est recommandé de positionner le dispositif radiofréquence externe au droit de cet indicateur visuel.

De ce fait, la présence de cet indicateur visuel donne une indication sur la localisation azimutale du dispositif électronique au sein de l'enveloppe pneumatique de l'arrangement. De ce fait, le balayage de α degrés effectué lors du mode d'interrogation assure de ne pas pénaliser le transfert énergétique entre le dispositif radiofréquence externe et le dispositif électronique. De ce fait, l'opérateur ne doit plus changer de position de lecture du dispositif radiofréquence externe. La non réponse de la part du dispositif électronique ne peut provenir que, d'une part, d'une durée d'iémission pas suffisante pour que le dispositif électronique récupère de l'énergie radioélectrique et d'autre part, d'un coefficient de transfert pas suffisant en raison d'un éloignement entre les deux composants.

Très avantageusement, le secteur angulaire β de balayage de l'émission radioélectrique est de 30 degrés, préférentiellement de 20 degrés et très préférentiellement de 5 degrés.

Dans une configuration où la distance D0 entre le dispositif radiofréquence externe et le dispositif électronique est nulle et en l'absence d'un indicateur visuel sur l'enveloppe pneumatique, un balayage large est nécessaire pour rentrer en communication avec le dispositif électronique. Toutefois, si celui-ci est trop large, le risque de non réponse de la part du dispositif électronique augmente. De ce fait, un secteur angulaire intermédiaire est préféré notamment en cas de présence d'un indicateur visuel. Bien entendu, si l'indicateur visuel est localisé au même azimut que le dispositif électronique, un balayage fin est alors idéal pour transférer le maximum d'énergie électrique au dispositif électronique à iso durée d'interrogation.

Très avantageusement, la durée T0 de balayage de l'émission radioélectrique est comprise entre 0,02 secondes et 2 secondes, de préférence entre 0,5 et 1,5 secondes et très préférentiellement de 1 seconde.

Comme la durée du mode d'émission est un paramètre essentiel pour le transfert d'énergie entre le dispositif radiofréquence externe et le dispositif électronique, celui-ci est fonction de la quantité d'énergie nécessaire et du positionnement relatif de l'antenne radiofréquence du dispositif électronique par rapport au dispositif externe. La fourchette mentionnée est suffisante pour obtenir une réponse de la part du dispositif électronique. La fourchette basse intègre les temps incompressibles liés aux opérations effectuées par le dispositif électronique pour effectuer la mesure et la transférer par radiofréquence au dispositif externe.

Cependant, en raison de l'incertitude de la position du dispositif électronique au sein de l'enveloppe pneumatique de l'arrangement, de la qualité de transfert énergétique entre les deux composants et des autres paramètres influents sur ce transfert comme la distance D0, l'angle de balayage a, il est préférable de prendre une fourchette comprise entre 0,5 et 1,5 secondes. La borne haute de cette fourchette restant raisonnable pour qualifier le mode d'interrogation du dispositif électronique comme instantané au regard d'une mesure traditionnelle. Idéalement, un temps de balayage de 1 seconde est recommandée pour transférer suffisamment d'énergie et notamment lorsque le dispositif électronique doit effectuer plusieurs tâches en raison de la multitude de capteurs du dispositif électronique en combinaison avec les autres paramètres influents en mode préféré comme une distance D0 nulle, une localisation au droit d'un indicateur visuel et un balayage de 5 degrés autour de la position de lecture.

Selon un mode de réalisation spécifique, le facteur de réduction μ de l'angle de balayage de l'émission radioélectrique est un nombre réel, de préférence le nombre 2.

Dans le cas où la non réponse du dispositif électronique est lié à un couplage électromagnétique de moyenne qualité entre le dispositif radiofréquence externe du dispositif électronique de l'arrangement, il convient de réduire le balayage angulaire pour transférer plus d'énergie au dispositif électronique à iso conditions d'interrogation du dispositif électronique comme par exemple la durée d'émission T0. La dichotomie est la méthode à privilégier pour une mise en place simple et rapide par l'opérateur.

Selon un autre mode de réalisation spécifique, le facteur de multiplication ρ de la durée T0 de l'émission radioélectrique est un nombre réel, de préférence le nombre 2.

Dans le cas où la non réponse du dispositif électronique est lié à une durée d'exposition des signaux radioélectriques trop faibles pour que le dispositif électronique emmagasine suffisamment d'énergie pour effectuer ses tâches, il convient d'augmenter la durée d'émission. Ainsi on accroit l'énergie transmise au dispositif électronique à iso condition de communication comme par exemple la distance D0 ou l'angle de balayage a. La dichotomie est la méthode à privilégier pour une mise en place simple et rapide par l'opérateur.

Selon un mode de réalisation préférentiel, le dispositif radiofréquence externe est en mode de polarisation linéaire.

Dans cette configuration, le dispositif radiofréquence externe transmet toute l'énergie radioélectrique dans une même et seule direction. De ce fait, la quantité d'énergie transmise est optimale dans cette direction privilégiée et dans les autres directions, aucune énergie radioélectrique n'est émise.

Selon un autre mode de réalisation préférentiel, l'axe polaire de l'antenne du dispositif radiofréquence externe est orienté selon des informations de l'indicateur visuel.

Ainsi, si l'émission d'énergie radioélectrique est directionnelle, il est possible d'optimiser cette direction par rapport à l'orientation de l'axe polaire de l'antenne radiofréquence du dispositif électronique. En particulier, si l'enveloppe pneumatique est équipée d'un indicateur visuel sur la surface externe de l'un des flancs, cet indicateur peut aussi renseigner l'opérateur sur l'orientation de l'axe polaire de l'antenne radiofréquence du dispositif électronique. Notamment, si cet axe polaire est orienté plutôt radialement ou circonférentiellement par rapport au repère mobile de l'enveloppe pneumatique. Ainsi en alignant la direction d'émission du champ radioélectrique du dispositif radiofréquence externe avec l'axe polaire du dispositif électronique on optimise le transfert d'énergie vers le dispositif électronique à iso condition de communication. Si, l'axe polaire de l'antenne radiofréquence du dispositif électronique est orienté axialement, il convient alors de positionner l'axe polaire de l'antenne du dispositif radiofréquence externe dans le sens radial. En revanche si l'axe polaire de l'antenne radiofréquence du dispositif électronique est orienté circonférentiellement, il convient alors de positionner l'axe polaire de l'antenne du dispositif radiofréquence externe dans la direction circonférentielle. Sinon, l'orientation de l'antenne radiofréquence du dispositif électronique est une combinaison des vecteurs unitaires des directions axiale et circonférentielle, il conviendra d'orienter l'axe polaire du dispositif radiofréquence externe de la même combinaison suivant le vecteur unitaire des directions radiale et circonférentielle.

L'invention sera mieux comprise à la lecture de la description qui va suivre donnée uniquement à titre d'exemple et faite en se référant aux figures annexées dans lesquelles les mêmes numéros de référence désignent partout des parties identiques et dans lesquelles :

- la figure 1 présente un synoptique du dispositif électronique selon l'invention ;

- la figure 2 est une vue en coupe du système de mesure selon l'invention ;

- la figure 3 est une vue de dessus d'un brin de l'antenne rayonnante de type dipôle ;

- la figure 4 est une vue de dessus d'une boucle formant le brin d'une antenne dipôle selon l'invention ;

- la figure 5 est une coupe en perspective d'une enveloppe pneumatique ; et

- la figure 6 est un synoptique du procédé de communication d'un ensemble monté comprenant un arrangement selon l'invention.

Dans ce qui suit, les termes « pneumatique » et « bandage pneumatique » sont employés de façon équivalente et concernent tout type de bandage pneumatique ou non pneumatique (en anglais « tire », « pneumatic tire », « non-pneumatic tire »).

Le terme « dispositif électronique » comprend l'antenne radiofréquence UHF, la carte électronique et le plan de masse.

Le terme « système de mesure » comprend le dispositif électronique et l'interface de liaison.

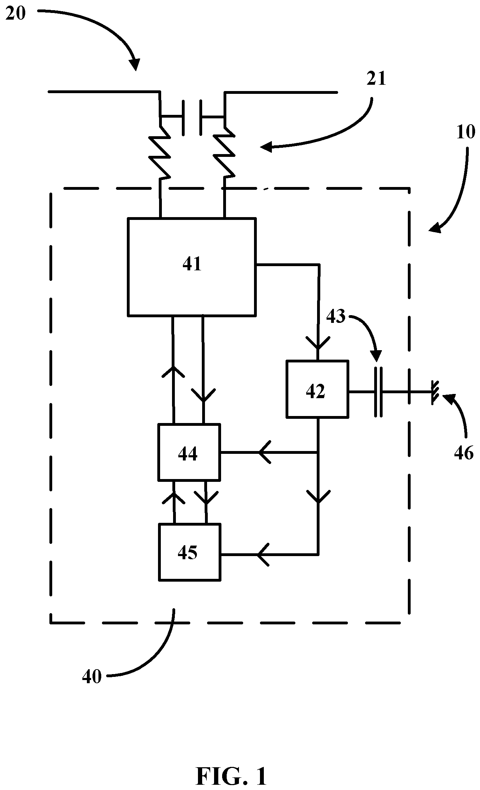

Sur la figure 1, on distingue un synoptique du dispositif électronique 10 du système de mesure de paramètre de l'ensemble monté. D'une part, la partie radiocommunication comprend une antenne rayonnante UHF 20 qui est connectée à la carte électronique 40 par l'intermédiaire de la puce électronique 41. Au besoin, un circuit d'adaptation d'impédance 21 est intercalé entre ses deux composants pour les coupler efficacement et optimiser le transfert de la puissance électrique.

La carte électronique 40 comprend un premier sous ensemble assurant la gestion énergétique. Ce sous ensemble comprend d'une part un gestionnaire d'énergie 42 qui sert d'interface entre la puce électronique 41 et l'élément capacitif 43. En effet, l'énergie électrique fournie à la puce électronique 41 est dirigée vers le gestionnaire d'énergie 42 qui oriente le flux énergétique vers l'élément capacitif 43. Cet élément capacitif 43 est le réservoir énergétique de la carte électronique 40. Lorsque l'élément capacitif 43 a atteint un certain seuil permettant de mettre en fonctionnement la carte électronique 40, l'énergie de l'élément capacitif 43 est libérée dans la carte électronique 40 par l'intermédiaire du gestionnaire d'énergie 42.

La carte électronique 40 comprend aussi un second sous ensemble assurant la mesure et le post traitement de cette mesure comprenant tout d'abord depuis la puce électronique 41 un microcontrôleur 44. Ce microcontrôleur 44 assure la communication d'information entre la puce électronique 41 et le capteur de mesure de paramètre de l'ensemble monté 45. Au minimum, la communication depuis le microcontrôleur 44 vers la puce électronique 41 est réalisée. Souvent, la communication est dans les deux sens. En effet, soit la puce électronique 41 envoie une instruction parmi une liste d'instructions au microcontrôleur 44, soit la puce électronique 41 envoie l'information reçue du microcontrôleur 44, celui-ci vérifie que l'information transmise est conforme. Le microcontrôleur 44 est aussi en communication avec le capteur de mesure 45. La communication est au minimum depuis le capteur de mesure 45 vers le microcontrôleur 44. Souvent elle est bilatérale pour acquitter l'information transmise ou transmettre une opération au capteur de mesure parmi une liste d'opérations possibles à effectuer telles que par exemple, réaliser une mesure ou communiquer le contenu partiel ou total de la mémoire du capteur de mesure 45 ou toute autre tâche à réaliser par le capteur de mesure 45.

En dehors de ces deux premiers sous-ensembles connectés entre eux par l'intermédiaire d'un circuit électrique, la carte électronique 40 est reliée à un plan de masse 46. Bien entendu le circuit électrique relie de manière galvanique l'ensemble des éléments de la carte électronique 40. Il est à noter que lorsque le capteur de mesure 45 est de type analogique, un convertisseur numérique/analogique est incorporé entre le microcontrôleur 44 et le capteur de mesure 45 afin de décoder ou encoder l'information entre le mode numérique propre à la puce électronique 41 et le mode analogique du capteur de mesure 45. Enfin le gestionnaire d'énergie 42 transmet l'énergie nécessaire au bon fonctionnement de la carte électronique 40 vers au moins le microcontrôleur 44 qui la redistribue alors au capteur de mesure 45. Mais le gestionnaire d'énergie 42 peut comme indiqué sur le synoptique aussi alimenter directement le capteur de mesure 45 et au besoin le convertisseur numérique/ analogique.

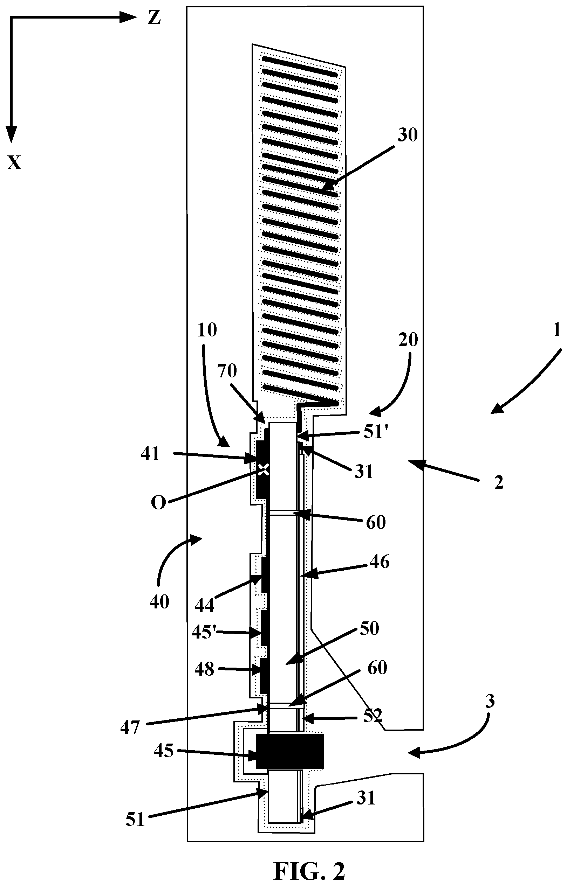

La figure 2 est une coupe du système de mesure 1 de paramètre de l'ensemble monté selon le plan OXZ. La direction X est la direction de l'axe polaire de l'antenne rayonnante UHF 20 qui est ici un dipôle demi-onde. La direction Z est la direction verticale à la carte électronique 40. Enfin, le point O est le centre de la puce électronique 41. Celle-ci se présente classiquement sur la forme d'un parallélépipède dont la direction verticale Z correspond à sa plus petite dimension.

Ce système de mesure 1 comprend une interface de liaison 2 englobant l'antenne rayonnante 20, le plan de masse 46 et la carte électronique 40. Cette interface de liaison 2 est une masse en mélange élastomère. Ainsi toutes les solutions d'adhésion élastomère/élastomère pourront être employées pour fixer le système de mesure 1 à l'enveloppe pneumatique. L'interface de liaison 2 comporte un orifice traversant 3 mettant en communication le fluide situé à l'extérieur de l'interface de liaison 2 avec le capteur de mesure 45 de type capteur de pression et de température dont la mesure se focalise sur les propriétés de ce fluide.

Dans cette configuration, le système de mesure 1 comprend aussi un premier brin 30 métallique de type hélicoïdal connecté à la carte électronique 40. L'ancrage mécanique de ce brin hélicoïdal 30 est réalisé par l'intermédiaire d'un orifice traversant verticalement le circuit imprimé 50 et d'une soudure de ce brin 30 métallique sur une pastille métallique comme par exemple du cuivre compris dans le circuit électrique 47 de la carte électronique 40. Ce point d'accrochage du brin 30 correspond au point d'alimentation de ce brin 30. Le premier élément de la carte électronique 40 relié par l'intermédiaire du circuit électrique 47 à cette pastille est la puce électronique 41. Celle-ci est aussi connectée par l'intermédiaire du circuit électronique 47 à un second brin 31 de l'antenne rayonnante. Cette connexion correspond à un second point d'alimentation de l'antenne radiofréquence UHF 30.

Ce second brin 31 est ici une boucle circulaire métallique, c'est donc une structure surfacique dont le plan contient l'axe de rotation du premier brin 30 hélicoïdal et dont la direction principale de la boucle est parallèle à l'axe de rotation du premier brin 30. Ainsi les deux brins 30 et 31 constituent bien une antenne rayonnante de type dipôle. La longueur du chemin parcouru le long de chaque brin est adaptée à une fréquence centrale de communication d'environ 433Mhz lorsque le système de mesure 1 est incorporé dans une enveloppe pneumatique au niveau du sommet. Le deuxième brin de l'antenne rayonnante peut être dans une autre variante du dispositif de mesure 10 un mono brin métallique de type hélicoïdal connecté à la carte électronique 40 de sorte que les axes longitudinaux de chaque brin soient coaxiaux.

La carte électronique 40 est construite à partir d'un circuit imprimé 50 dont l'une des faces métalliques 51, ici du cuivre, a été chimiquement attaquée afin de constituer le circuit électrique 47 constitué de fils conducteurs reliant des pastilles de connexion où sont reliés les divers éléments du dispositif électronique 10. Ces pastilles peuvent être pleines ou creuses selon le système d'ancrage de l'élément au circuit imprimé 50. Dans le cas du brin hélicoïdal 30 et de la boucle 31, les pastilles sont creuses. Dans le cas du gestionnaire d'énergie ou de l'élément capacitif ou du microcontrôleur 44, elles sont pleines, ces éléments étant fixés au circuit imprimé 50 par collage. L'autre face 51'du circuit imprimé 50 est recouvert par un laminé bicouche dont la couche supérieure 52 est métallique afin de constituer le plan de masse 46. Ici, le plan de masse 46 est dissocié de la boucle 31constituant le second brin de l'antenne rayonnante bien que les deux éléments étaient initialement joints sur la couche supérieure 52 du laminé. Une attaque chimique sur la couche métallique 52 du laminé bicouche a permis de les dissocier physiquement et électriquement par l'intermédiaire de la couche inférieure isolante du laminé.

La connexion entre le plan de masse 46 et la carte électronique est réalisé par des éléments de connexion 60 reliant la surface supérieure 52 à la surface inférieure 51 du circuit imprimé. La connexion au niveau de la surface inférieure 51 s'effectuant au niveau du circuit électrique 47.

La première face 51 du circuit imprimé 50 accueille les divers éléments de la carte électronique 40. Ceux-ci sont fixés mécaniquement au circuit imprimé 50 et connectés électriquement au circuit électrique 47. Ici seul le sous-ensemble assurant la mesure est représenté sur la figure 2. En premier lieu, directement connecté à la puce électronique 41, se situe le microcontrôleur 44. Ensuite un capteur de mesure 45 de type capteur de pression est connecté au microcontrôleur 44 et situé entre les deux composants un convertisseur analogique/ numérique 48. Un second capteur de mesure 45' de type accéléromètre numérique est directement connecté de manière galvanique au microcontrôleur 44.

Il est à noter que le capteur de pression 45 est positionné de part et d'autre du circuit imprimé 50. En effet, il est connecté électriquement au circuit imprimé électrique 47 sur la première face 51 du circuit imprimé 50. Mais, la partie active du capteur de pression 45 est située au-dessus de la couche supérieure 52 du laminé bicouche selon la direction Z. L'ancrage du capteur de pression 45 se faisant postérieurement à la connexion des autres composants électroniques.

Une couche de protection 70 est alors nécessaire pour protéger ces éléments des agressions physico chimiques de l'environnement extérieur au système de mesure 1. Cette protection 70 est réalisée à base de parylène déposée par condensation par-dessus l'ensemble constitué de la carte électronique 40 complète, du plan de masse 46 et de l'antenne radiofréquence 20. Ce procédé de pose permet d'assurer une épaisseur constante de protecteur sur toute la surface externe et de faible épaisseur. Ainsi, on assurer une protection maximale pour une masse minimale de protecteur. Préalablement la zone active du capteur de pression 45 a été protégée afin de ne pas être recouverte par cette protection 70. Le parylène assure principalement une herméticité aux pollutions solides et liquides. Enfin, ce protecteur 70 est compatible avec les mélanges élastomères constituant l'interface de liaison 2. Bien entendu un autre protecteur tel que la résine époxy aurait pu convenir mais leur mise en œuvre n'aurait pas été aussi intéressante que le parylène.

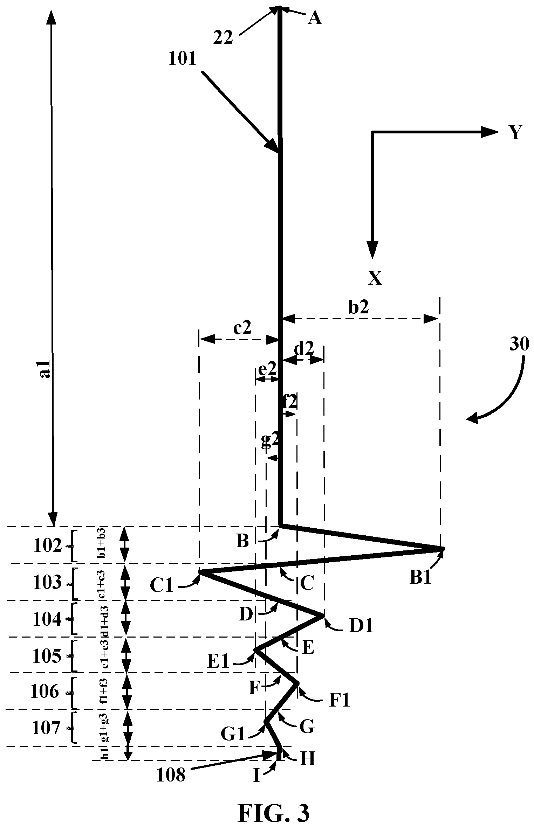

La figure 3 est un exemple de brin 30 d'une antenne rayonnante UHF dans une configuration optimale en matière d'efficacité énergétique. Celle-ci est une structure bidimensionnelle s'intégrant parfaitement au système de mesure de paramètre de l'ensemble monté. Les deux extrémités A et I du brin définissent l'axe X représentant l'axe de l'antenne rayonnante UHF ou axe polaire. L'axe Y est la direction perpendiculaire à l'axe X dans le plan du brin 30. Le point A correspond ici au point d'alimentation 22 du brin 30 d'une antenne radiofréquence UHF du dispositif électronique.

Elle comprend un fil métallique présentant tout d'abord une section rectiligne 101 entre les points A et B d'une longueur représentant 50% de la longueur totale du brin Le point A est l'extrémité du brin 30 qui sera connectée de manière galvanique à la puce électronique. La seconde partie du brin 30 entre les point B et H est une structure de type méandre droit se terminant par une section rectiligne entre les points H et I représentant 0,5% de la longueur totale du brin 30. En fait, la section entre les points B et H est une succession de méandres 102, 103, 104,105, 106 et 107 dont la dimension dans la direction X est constante et d'une valeur équivalente à 1,5% de la longueur du brin 30. Mais la dimension dans la direction Y est continument décroissante. Par exemple, le méandre 103 est délimité par les points C et D. Pour chaque méandre, le chemin parcouru le long du méandre peut se décomposer en une composante selon la direction X et une composante selon la direction Y. La composante X de chaque méandre est de par la construction de ce brin constante et a une valeur équivalente à 3% de la longueur du brin 30. Mais la composante Y de chaque méandre en partant de l'extrémité B vers l'extrémité H est continument décroissante d'un facteur 2 avec une dimension maximale sur le méandre 102 équivalente à 8% de la longueur du brin 30. Cette composante X pour le méandre 104 est la sommation des distances élémentaires d1 et d3. Pour la composante Y de ce même méandre 104, c'est deux fois la distance élémentaire d2. Les formules des composantes X et Y seront similaires d'un méandre à l'autre.

De ce fait, le chemin parcouru L0 le long de ce brin 30 est alors la distance complète du brin 30. La valeur de L0 est d'environ 80 millimètres qui est bien comprise dans l'intervalle souhaité pour une antenne rayonnante dipôle demi-onde fonctionnant à la fréquence de 900 MHz.

Le chemin orienté L1 de ce brin correspond à la distance parcourue selon l'unique direction X qui est l'axe de l'antenne rayonnante. Ce chemin L1 est alors simplement défini par la formule suivante :

$$L1 = a_1 + \sum_{i=b}^{g}(i_1 + i_3) + h_1 = 0,685 * L0$$

La valeur de L1 représente environ 70 pourcents du chemin parcouru L0 totale le long du brin 30. Ainsi la majorité du brin 30 aura pour vocation à accélérer les charges électriques situées sur le brin 30 à l'aide du champ électrique du dispositif radiofréquence.

Enfin le chemin orienté optimal L2 de ce brin 30 qui correspond à la plus grande portion continue du brin 30 parfaitement alignée avec la direction X correspondant à l'axe de l'antenne rayonnante est alors définie par la formule suivante :

$$L2 = a_1 = 0,5 * L0$$

Le chemin orienté optimal L2 est bien à plus de 70 pourcents du chemin orienté L1 du brin 30 de l'antenne rayonnante. De plus, ce chemin orienté optimal L2 comprend l'extrémité A du brin qui sera placé au droit de la connexion électrique vers la puce électronique.

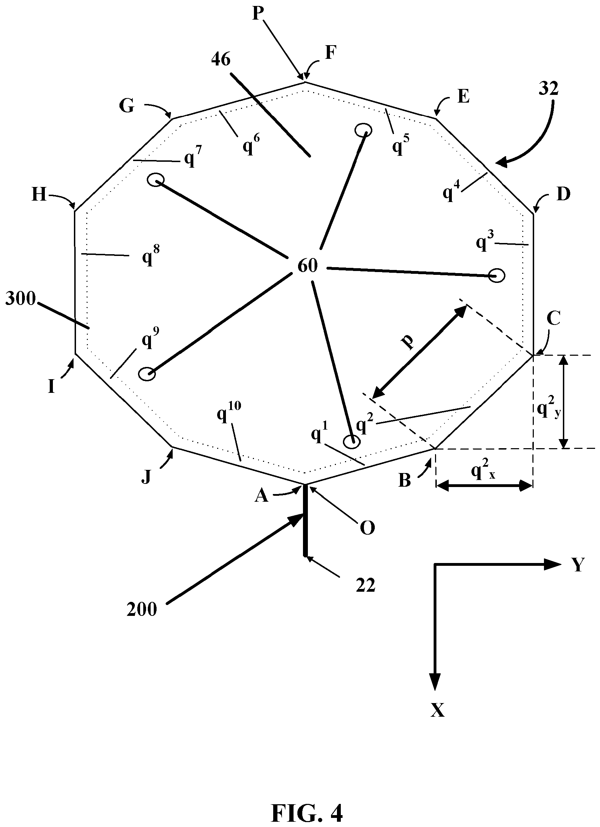

La figure 4 est une vue de dessus d'un brin 32 de l'antenne rayonnante UHF intégré dans le plan de masse 46 du dispositif électronique. Le plan de masse 46 est ici délimité par un hexagone régulier définissant une surface totale d'environ 500 millimètres carrées. Le plan de masse 46 présente sur sa face cinq éléments de connexion 60 entre le plan de masse 46 et la carte électronique permettant d'assurer la connexion électrique. A une extrémité de l'hexagone se trouve une section rectiligne de petite dimension 200 qui sera négligée pour l'évaluation des chemins du brin. Un alignement de cette section rectiligne 200 avec l'axe de l'antenne radiofréquence UHF est souhaitable pour réaliser une antenne dipôle demi-onde dont un premier brin sera la boucle 32 intégrée au plan de masse 46. Cet alignement représente l'axe X ou axe polaire. L'extrémité laissée libre de cette section rectiligne 200 représente un point d'alimentation 22 de l'antenne radiofréquence UHF. La direction Y est orthonormée aux directions X et Z où Z est la direction normale du plan de masse 46 dirigé extérieurement à la carte électronique.

Chaque extrémité de l'hexagone est définie par une lettre de A à J suivant le sens direct de parcours de l'hexagone dans le plan XY. Chaque segment $q^i$ de l'hexagone a une longueur p qui selon l'orientation du segment de longueur p dans le plan XY définit une composante $q^i_x$ selon la direction X et une composante $q^i_y$ selon la direction Y.

Le brin boucle 32 est alors localisé fictivement sur la périphérie du plan de masse 46. En effet, cette zone correspond à la surface de déplacement des charges électriques situées sur le plan de masse 46 lorsque celui-ci est placé dans un champ électrique E parallèle au plan de masse 46. La ligne de points 300 représente fictivement l'épaisseur de cette boucle 32 afin de la visualiser sur la figure 4.

L'intersection de la boucle 32 avec l'axe X définit un premier point O et un second point P en partant de la section rectiligne 200. La distance définie par l'hexagone régulier entre ces deux points est constante quel que soit le sens de parcours de l'hexagone régulier. Cette distance parcourue correspond à la fois au demi périmètre D de la boucle 32 mais aussi au chemin parcouru L0 de la boucle 32. Cette distance est définie, en se limitant aux segments $q^1$ à $q^5$ de l'hexagone régulier, par la formule suivante :

$$L0 = \sum_{i=1}^{5} q^i = 5p$$

Il est alors facile de déterminer le chemin orienté L1 de la boucle 32 en se focalisant sur les projections des segments de l'hexagone régulier selon la direction X. Ainsi le chemin orienté L1 est obtenu à l'aide la formule suivante :

$$L1 = \sum_{i=1}^{5} q_x^i = 3{,}72 * p = 0{,}74 * L0$$

Ce brin 32 de type boucle permet d'obtenir un chemin orienté correcte pour obtenir une efficacité énergétique suffisante. Cependant, celle-ci n'est pas optimale du fait de l'orientation du brin boucle 32. Cependant, la forme particulière de cette antenne assure une compacité du système de mesure au plus juste en faisant jouer au plan de masse 46 un premier rôle de régulateur électrique de la carte électronique et un second rôle de brin radiofréquence.

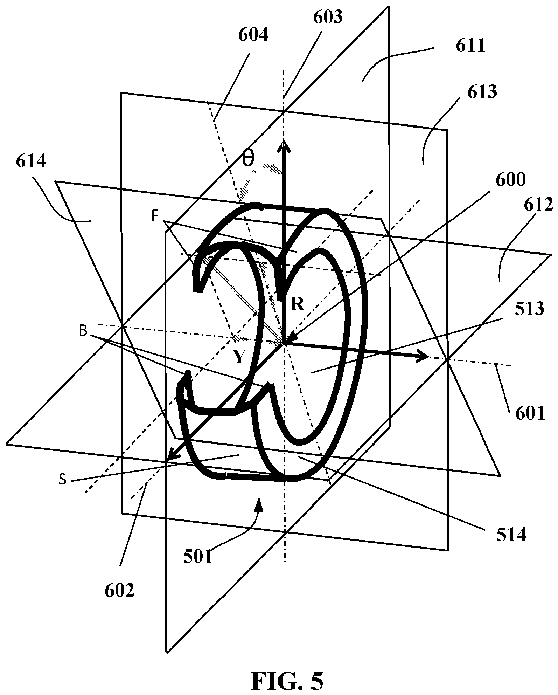

La figure 5 présente une coupe d'un bandage pneumatique 501 selon l'invention comprenant un sommet S prolongé par deux flancs F et se terminant par deux bourrelets B. En l'espèce, le pneumatique 501 est destiné à être monté sur une roue qui n'est pas représentée sur cette figure, au niveau des deux bourrelets B. On délimite ainsi une cavité fermée, contenant au moins un fluide sous pression, délimitée à la fois par la deuxième surface radialement intérieure 513 au bandage pneumatique 501 et par la surface externe de la roue. L'enveloppe pneumatique 501 comprend aussi une première surface 514 radialement externe à l'enveloppe pneumatique 501.

On notera l'axe de référence 601 correspondant à l'axe de référence ou axe naturel de rotation du bandage pneumatique 501 et le plan médian 611, perpendiculaire à l'axe de référence 601 et équidistant des deux bourrelets. L'intersection de l'axe de référence 601 par le plan médian 611 détermine le centre du bandage pneumatique 600. On définira un repère cartésien au centre du bandage pneumatique 600 constitué de l'axe de référence 601, d'un axe vertical 603 perpendiculaire au sol et d'un axe longitudinal 602 perpendiculaire aux deux autres axes. Et, on définira le plan axial 612 passant par l'axe de référence 601 et l'axe longitudinal 602, parallèle au plan du sol et perpendiculaire au plan médian 611 Enfin on appellera plan vertical 613, le plan perpendiculaire à la fois au plan médian 611 et au plan axial 612 passant par l'axe vertical 603.

Tout point matériel du bandage pneumatique 501 est défini de façon unique par ses coordonnées cylindriques (Y, R, θ). Le scalaire Y représente la distance axiale au centre du bandage pneumatique 600 dans la direction de l'axe de référence 601 définie par la projection orthogonale du point matériel du pneumatique 501 sur l'axe de référence 601. On définira un plan radial 614 faisant un angle θ par rapport au plan vertical 613 autour de l'axe de référence 601. Le point matériel du bandage pneumatique 501 est repéré dans ce plan radial 614 par la distance R au centre du bandage pneumatique 600 dans la direction perpendiculaire à l'axe de référence 601 identifiée par la projection orthogonale de ce point matériel sur l'axe radial 604. Le vecteur unitaire perpendiculaire au plan radial 614 et formant un trièdre direct avec les vecteurs unitaire des directions axiale 601 et radiale 604 représente la direction circonférentielle de l'enveloppe pneumatique 501.

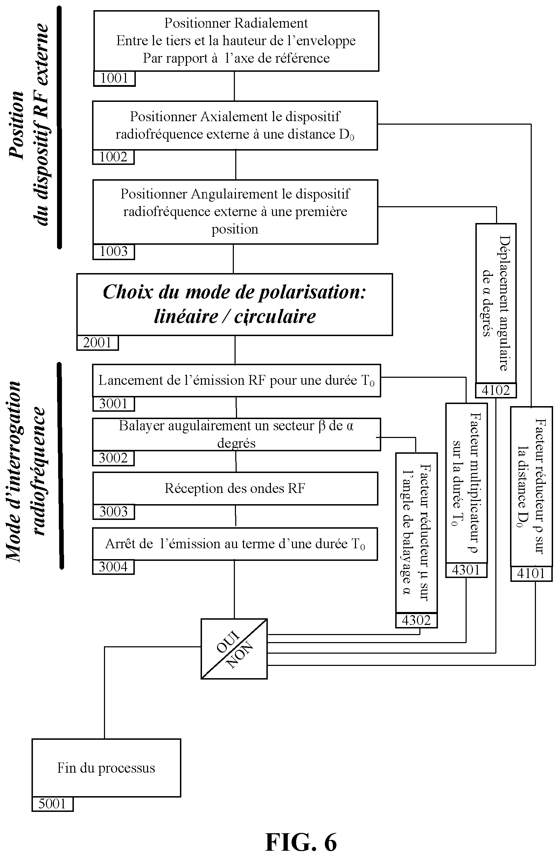

La figure 6 est un synoptique du procédé de communication entre un ensemble monté ayant un arrangement selon le premier objet de l'invention et un dispositif radiofréquence externe. Ce procédé comprend trois phases primordiales.

La première phase, incrémentée à partir de 1000, consiste à positionner le dispositif radiofréquence externe par rapport à l'enveloppe pneumatique équipée d'un dispositif électronique de mesure des paramètres de l'ensemble monté. Cette position de lecteur comprend une première étape 1001 consistant à positionner radialement par rapport à l'axe de référence de l'enveloppe pneumatique le dispositif radiofréquence externe. Celui-ci se trouvant entre le tiers et la hauteur totale du flanc de l'enveloppe pneumatique.

La deuxième étape 1002 consiste à approcher axialement à une distance D0 l'axe polaire de l'antenne radiofréquence dudit dispositif externe de la deuxième surface, radialement externe, de l'enveloppe pneumatique. Préférentiellement cette distance D0 est nulle conduisant au meilleur couplage radiofréquence possible. Cependant, il est possible d'éloigner l'axe polaire d'une distance allant jusqu'à 1 mètre pour éviter tout contact entre les deux composants, l'enveloppe pneumatique et le dispositif radiofréquence externe.

La troisième étape de positionnement 1003 du procédé de communication est de placer angulairement le dispositif radiofréquence externe par rapport à l'enveloppe pneumatique. En cas d'absence d'indicateur visuel sur le flanc externe de l'ensemble monté indiquant la présence du dispositif électronique de mesure, l'azimut est pris au hasard. Dans le cas contraire, on positionne le dispositif radiofréquence externe de telle manière que l'azimut de l'axe polaire du dispositif soit au droit de l'indicateur visuel du pneumatique. De plus si l'indicateur visuel renseigne l'opérateur sur une orientation de l'axe polaire du dispositif électronique de mesure, il convient alors d'orienter l'axe polaire du dispositif externe selon les indications recueillies.

La deuxième phase du procédé de communication, incrémentée à partir de 2000, réside dans le choix du mode de polarisation de l'antenne radiofréquence du dispositif externe. En effet, il est possible d'opter pour un mode de polarisation circulaire ou un mode de polarisation linéaire. Le premier conduit à émettre de l'énergie radioélectrique de façon omnidirectionnelle, le second mode conduit à émettre l'énergie dans une unique et seule direction. A iso énergie émise par le dispositif externe, le second mode a vocation à transmettre une plus importante puissance au dispositif électronique de mesure. Cependant, si la direction du mode linéaire est orthogonale à l'axe polaire du dispositif électronique de mesure, aucune énergie ne sera transmise au dispositif électronique. Le choix du mode de polarisation est effectué à l'étape 2001.

En cas de présence d'une information sur l'orientation de l'axe polaire du dispositif électronique de mesure au niveau de l'indicateur visuel sur le flanc de l'enveloppe pneumatique ou sur la fiche signalétique de cette même enveloppe, l'opérateur choisira le mode de polarisation linéaire pour optimiser le couplage énergétique entre les deux composants . Dans le cas contraire et par prudence dans tous les cas, il optera pour le mode de polarisation circulaire pour être certain d'émettre de l'énergie à destination du dispositif électronique de mesure.

La troisième phase du procédé de communication, incrémenté à partir de 3000, consiste à choisir le mode d'interrogation radiofréquence entre le dispositif externe et le dispositif électronique de mesure présent dans l'enveloppe pneumatique.

Après avoir défini le mode de polarisation de l'antenne du dispositif radiofréquence externe et l'avoir positionnée par rapport à l'enveloppe pneumatique, la première étape 3001 consiste à démarrer l'émission radioélectrique UHF à destination du dispositif électronique de mesure pour un durée continue T0. Ainsi, le dispositif externe émet des ondes radioélectriques pendant une durée T0 dans une direction choisie. Cette durée T0 est d'au moins 500 millisecondes pour transférer suffisamment d'énergie à destination du dispositif électronique pour que celui-ci exécute les taches basiques. La durée T0 peut atteindre les deux secondes en cas de mauvais couplage entre le dispositif externe et le dispositif électronique et l'exécution d'un processus de taches plus complet au niveau du dispositif de mesure. Quoiqu'il en soit, pour une mesure de pression standard, une durée d'interrogation d'une seconde ou deux secondes est un bon compromis.

Aprés cette première étape, au travers de l'étape 3002, l'opérateur balaye angulairement un secteur $\beta$ de $\alpha$ degrés à partir de la première position de lecture du dispositif radiofréquence externe. Peu importe la façon d'effectuer ce balayage angulaire, il peut être alternatif ou progressif. L'objectif est d'émettre une certaine quantité d'énergie radioélectrique sur un volume donnée de l'enveloppe pneumatique.

De ce fait, un balayage sur un secteur de 30 degrés est raisonnable notamment en cas de non information sur la position azimutale du dispositif électronique de mesure. Cependant, le couplage sera plus efficace avec un angle de 20 degrés surtout si la requête demandée par l'opérateur au travers du dispositif externe est énergivore pour le dispositif électronique de mesure telle que la pression de gonflage corrigée des variations thermiques de l'ensemble monté. Enfin, un balayage de 5 degrés est tout à fait réaliste en cas de présence d'un indicateur visuel même en mode de polarisation circulaire.

La troisième étape 3003 de cette phase consiste à recueillir les ondes radiofréquences du dispositif électronique de mesure en retour de l'interrogation avant de clôturer la phase pour une ultime étape 3004 de l'arrêt de l'émission radiofréquence. En effet, le dispositif électronique de mesure est un système passif qui utilise l'émission radioélectrique du dispositif externe pour transmettre les réponses demandées. Ainsi, une partie de la durée T0 d'émission radioélectrique est consacrée à la réception des ondes radioélectriques retours.

Selon qu'une réponse de la part du dispositif électronique de mesure a été reçue par le dispositif externe, il convient soit d'arrêter le procédé de communication, au travers de l'étape 5001, puisque l'information demandée a été transmise soit d'entreprendre des aménagements au procédé de communication au travers d'une phase de correction incrémentée à partir de 4000.

Parmi ces étapes de corrections, on dénote deux catégories distinctes. La première a vocation à optimiser le positionnement du dispositif radiofréquence externe par rapport au dispositif électronique de mesure, les étapes associées sont notées à partir de 4100. La seconde catégorie s'intéresse plus au mode d'interrogation radiofréquence, les étapes correspondantes sont incrémentées à partir de 4300.

Dans le cadre de l'optimisation de la position du dispositif externe par rapport au dispositif électronique de mesure, la première étape possible 4101 consiste à réduire la distance axiale D0 entre le dispositif externe et l'enveloppe pneumatique accueillant le dispositif électronique. Cette étape est à envisager en particulier dans le cas d'une requête dite énergivore au niveau du dispositif électronique de mesure comme par exemple la pression de gonflage corrigée des variations thermiques de l'ensemble monté.

La seconde étape 4102 envisageable dans cette catégorie consiste à modifier le secteur angulaire de balayage. Cette correction est fortement conseillée en cas d'absence d'indicateur visuel sur le flanc du pneumatique renseignant l'opérateur sur la position azimutale du dispositif électronique de mesure au sein de l'enveloppe pneumatique.

Parmi les étapes de la seconde catégorie de corrections, l'étape 4301 consiste à allonger la durée T0 d'émission radiofréquence du dispositif externe. Cette correction est souhaitable si le mode de polarisation de l'antenne radiofréquence est de type polarisation circulaire qui n'optimise pas la transmission d'énergie radioélectrique vers le dispositif électronique de mesure. De même, si la requête demandée est énergivore, il est préférable d'augmenter aussi la durée de l'émission radioélectrique.

Enfin, en cas d'absence d'indicateur visuel sur la surface externe du flanc de l'enveloppe pneumatique et qu'un premier secteur angulaire β de balayage a été employée sans obtenir de réponse en retour, l'opérateur peut opter pour l'étape 4302 consistant à réduire l'amplitude angulaire du balayage pour transmettre à iso durée T0 de rayonnement radioélectrique, une quantité plus élevée d'énergie vers le dispositif électronique de mesure.

Lorsqu'une ou plusieurs étapes de corrections sont mise en place, il convient de rejouer la phase d'interrogation pour obtenir un second verdict au procédé de communication. En cas d'une réponse, le procédé de communication se terminera vers l'étape 5001. Dans le cas contraire, il convient de choisir de nouvelles corrections qui soient raisonnables par rapport à la plage des divers paramètres du procédé de communication et relancer le mode d'interrogation.

## Revendications

**1.** Arrangement comprenant une enveloppe pneumatique (501), un dispositif électronique (10) de mesure des paramètres d'un ensemble monté et une interface de liaison (2) en matériau élastomère recouvrant au moins partiellement le dispositif électronique (10) de mesure et servant d'interface entre l'enveloppe pneumatique (501) et le dispositif électronique (10) de mesure, ledit dispositif électronique (10) de mesure comprenant :

- une antenne radiofréquence UHF (20) définissant un axe polaire (21) ; et
- une carte électronique (40) comprenant :

- une puce électronique (41) couplée électriquement à l'antenne radiofréquence UHF (20) par au moins une ligne galvanique de transmission (22) ; et
- au moins un capteur de mesure (45) de paramètre de l'ensemble monté ;

la dite enveloppe pneumatique (501) comprenant :

- un sommet (S), deux flancs (F) et deux bourrelets (B) de révolution autour d'un axe de référence (601) définissant une première surface (514) située extérieurement et une deuxième surface (513) située intérieurement à l'enveloppe pneumatique (501) par rapport à l'axe de référence (601) ; et
- un plan médian (611) perpendiculaire à l'axe de référence (601) et équidistant des deux bourrelets (B) ;

**caractérisé en ce que** l'interface de liaison (2) est fixée au droit dudit sommet (S) sur la deuxième surface (513) de l'enveloppe pneumatique (501) **et en ce qu'**au moins un point d'alimentation défini comme l'intersection entre l'axe polaire (21) et la au moins une ligne de transmission (22) est situé axialement dans la zone centrale du sommet (S) de l'enveloppe pneumatique (501).

**2.** Arrangement selon la revendication 1 dans lequel dispositif électronique (10) comprend un plan de masse (46) relié à la carte électronique (40).

**3.** Arrangement selon l'une quelconque des revendications précédentes dans lequel le au moins un point d'alimentation est situé dans le plan médian (611) de l'enveloppe pneumatique (501).

**4.** Arrangement selon l'une quelconque des revendications 1 à 3 dans lequel, l'enveloppe pneumatique (501) comprenant au moins un indicateur visuel situé sur la première surface (514) de l'enveloppe pneumatique (501) au droit de l'un des flancs (F), l'interface de liaison (2) est localisée sur un azimut éloigné de l'azimut du au moins un indicateur visuel de moins de 15 degrés, de préférence de moins de 5 degrés.

**5.** Arrangement selon la revendication 4, dans lequel l'azimut de l'interface de liaison (2) est superposé à l'azimut du au moins un indicateur visuel.

**6.** Arrangement selon l'une quelconque des revendications précédentes, dans lequel l'antenne radiofréquence UHF (20) est une antenne mono bande de type dipôle demi onde dont la longueur totale L est comprise entre les bornes suivantes :

$$0,9*C/(2*f)< L< 1,1*C/(2*f) ,$$

dans lequel, C est la célérité des ondes radioélectriques dans le milieu où est noyé l'antenne radiofréquence UHF (20) et f est la fréquence de communication de l'antenne radiofréquence UHF (20).

**7.** Arrangement selon l'une quelconque des revendications de 1 à 6 dans lequel l'axe polaire de l'antenne radiofréquence UHF (20) est parallèle à la direction circonférentielle de l'enveloppe pneumatique (501).

**8.** Arrangement selon l'une des revendications de 1 à 6 dans lequel l'axe polaire de l'antenne radiofréquence UHF (20) est parallèle à l'axe de référence (601) de l'enveloppe pneumatique (501).

**9.** Procédé de communication entre un ensemble monté et un dispositif radiofréquence externe comprenant une antenne radiofréquence présentant un axe polaire, ledit ensemble monté comprenant un arrangement selon l'une des revendications de 1 à 8, . comprenant les étapes suivantes :

- Positionner radialement le dispositif radiofréquence externe à une distance radiale R par rapport à l'axe de référence (601), comprise entre le tiers et la hauteur totale de l'enveloppe pneumatique (501);
- Approcher axialement, au droit de l'un des flancs (F) de l'enveloppe pneumatique (501), l'axe polaire de l'antenne radiofréquence du dispositif radiofréquence externe à une distance D0 par rapport à la première surface (514) de l'enveloppe pneumatique (501) de l'ensemble monté définissant une première position de lecture; et
- Démarrer une émission radioélectrique par le dispositif radiofréquence externe pendant une durée T0 en balayant angulairement un premier secteur angulaire β de α degrés.

10. Procédé de communication selon la revendication 9 dans lequel, si aucune réponse n'a été obtenue par le dispositif radiofréquence externe, on déplace ledit dispositif radiofréquence externe à une deuxième position située à α degrés de la première position avant de redémarrer l'émission radioélectrique.

11. Procédé de communication selon l'une quelconque des revendications 9 à 10, dans lequel, si aucune réponse n'a été obtenue par le dispositif radiofréquence externe, on affecte un facteur de réduction γ à la distance D0 entre l'axe polaire de l'antenne du dispositif radiofréquence externe et la première surface (514) de l'enveloppe pneumatique (501)avant de redémarrer l'émission radioélectrique.

12. Procédé de communication selon l'une quelconque des revendications 9 à 11, dans lequel, si aucune réponse n'a été obtenue par le dispositif radiofréquence externe, on affecte un facteur de réduction μ à l'angle α du premier secteur angulaire β de balayage avant de redémarrer l'émission radioélectrique.

13. Procédé de communication selon l'une quelconque des revendications 9 à 12, dans lequel, si aucune réponse n'a été obtenue par le dispositif radiofréquence externe, on affecte un facteur multiplicateur ρ à la durée T0 du mode d'interrogation avant de redémarrer l'émission radioélectrique.

14. Procédé de communication selon l'une quelconque des revendications 9 à 13 en combinaison avec un arrangement selon l'une des revendications de 4 à 8 dans lequel, le positionnement du dispositif radiofréquence externe est effectué au droit du au moins un indicateur visuel.

15. Procédé de communication selon l'une quelconque des revendications 9 à 14 pris en combinaison avec un arrangement selon l'une des revendications de 4 à 8, dans lequel, le dispositif radiofréquence externe étant en mode de polarisation linéaire, l'axe polaire de l'antenne du dispositif radiofréquence externe est orienté selon des informations du au moins un indicateur visuel.

**Patentansprüche**

1. Anordnung, die einen Reifenmantel (501), eine elektronische Messvorrichtung (10) der Parameter einer montierten Einheit und eine Verbindungsschnittstelle (2) aus Elastomermaterial enthält, die die elektronische Messvorrichtung (10) mindestens teilweise überdeckt und als Schnittstelle zwischen dem Reifenmantel (501) und der elektronischen Messvorrichtung (10) dient, wobei die elektronische Messvorrichtung (10) enthält:

- eine UHF-Hochfrequenzantenne (20), die eine Polarachse (21) definiert; und
- eine Elektronikkarte (40), die enthält:

  - einen Chip (41), der durch mindestens eine galvanische Übertragungsleitung (22) elektrisch mit der UHF-Hochfrequenzantenne (20) gekoppelt ist; und
  - mindestens einen Parameter-Messsensor (45) der montierten Einheit;

wobei der Reifenmantel (501) enthält:

- einen Scheitel (S), zwei Flanken (F) und zwei um eine Bezugsachse (601) drehsymmetrische Wülste (B), die eine erste Fläche (514) außerhalb und eine zweite Fläche (513) innerhalb des Reifenmantels (501) bezüglich der Bezugsachse (601) befindlich definieren; und
- eine Mittelebene (611) lotrecht zur Bezugsachse (601) und in gleichem Abstand zu den zwei Wülsten (B);

**dadurch gekennzeichnet, dass** die Verbindungsschnittstelle (2) gegenüber dem Scheitel (S) auf der zweiten Fläche (513) des Reifenmantels (501) befestigt ist, und dass mindestens ein Einspeisepunkt, der als die Schnittstelle zwischen der Polarachse (21) und der mindestens einen Übertragungsleitung (22) definiert wird, sich axial in der zentralen Zone des Scheitels (S) des Reifenmantels (501) befindet.

2. Anordnung nach Anspruch 1, wobei die elektronische Vorrichtung (10) eine Masseebene (46) enthält, die mit der Elektronikkarte (40) verbunden ist.

3. Anordnung nach einem der vorhergehenden Ansprüche, wobei der mindestens eine Einspeisepunkt sich in der Mittelebene (611) des Reifenmantels (501) befindet.

4. Anordnung nach einem der Ansprüche 1 bis 3, wobei, da der Reifenmantel (501) mindestens eine optische Anzeige enthält, die sich auf der ersten Fläche (514) des Reifenmantels (501) gegenüber einer der Flanken (F) befindet, die Verbindungsschnittstelle (2) auf einem um weniger als 15 Grad, vorzugsweise weniger als 5 Grad, vom Azimut der mindestens einen optischen Anzeige entfernten Azimut lokalisiert ist.

5. Anordnung nach Anspruch 4, wobei der Azimut der Verbindungsschnittstelle (2) den Azimut der mindestens einen optischen Anzeige überlagert.

6. Anordnung nach einem der vorhergehenden Ansprüche, wobei die UHF-Hochfrequenzantenne (20) eine Monoband-Antenne der Art Halbwellendipol ist, deren Gesamtlänge L zwischen den folgenden Grenzen liegt:

$$0,9*C/(2*f)<L<1,1*C/(2*f),$$

wobei C die Fortpflanzungsgeschwindigkeit der Hochfrequenzwellen in dem Milieu ist, in das die UHF-Hochfrequenzantenne (20) eingebettet ist, und f die Kommunikationsfrequenz der UHF-Hochfrequenzantenne (20) ist.

7. Anordnung nach einem der Ansprüche 1 bis 6, wobei die Polarachse der UHF-Hochfrequenzantenne (20) parallel zur Umfangsrichtung des Reifenmantels (501) ist.

8. Anordnung nach einem der Ansprüche 1 bis 6, wobei die Polarachse der UHF-Hochfrequenzantenne (20) parallel zur Bezugsachse (601) des Reifenmantels (501) ist.

9. Kommunikationsverfahren zwischen einer montierten Einheit und einer externen Hochfrequenzvorrichtung, die eine Hochfrequenzantenne mit einer Polarachse enthält, wobei die montierte Einheit eine Anordnung nach einem der Ansprüche 1 bis 8 enthält, das die folgenden Schritte enthält:

- radiales Positionieren der externen Hochfrequenzvorrichtung in einem radialen Abstand R bezüglich der Bezugsachse (601), der zwischen dem Drittel und der Gesamthöhe des Reifenmantels (501) liegt;
- axiales Annähern, gegenüber einer der Flanken (F) des Reifenmantels (501), der Polarachse der Hochfrequenzantenne der externen Hochfrequenzvorrichtung in einen Abstand D0 bezüglich der ersten Fläche (514) des Reifenmantels (501) der montierten Einheit, der eine erste Leseposition definiert; und
- Starten einer Hochfrequenzemission durch die externe Hochfrequenzvorrichtung während einer Dauer T0 durch Winkelabtastung eines ersten Winkelsektors β von α Grad.

10. Kommunikationsverfahren nach Anspruch 9, wobei, wenn keine Antwort von der externen Hochfrequenzvorrichtung erhalten wurde, die externe Hochfrequenzvorrichtung in eine zweite Position verschoben wird, die sich α Grad von der ersten Position befindet, ehe die Hochfrequenzemission neu gestartet wird.

11. Kommunikationsverfahren nach einem der Ansprüche 9 bis 10, wobei, wenn keine Antwort von der externen Hochfrequenzvorrichtung erhalten wurde, ein Reduktionsfaktor γ dem Abstand D0 zwischen der Polarachse der Antenne der externen Hochfrequenzvorrichtung und der ersten Fläche (514) des Reifenmantels (501) zugewiesen wird, ehe die Hochfrequenzemission neu gestartet wird.

12. Kommunikationsverfahren nach einem der Ansprüche 9 bis 11, wobei, wenn keine Antwort von der externen Hochfrequenzvorrichtung erhalten wurde, ein Reduktionsfaktor μ dem Winkel α des ersten Abtast-Winkelsektors β zugewiesen wird, ehe die Hochfrequenzemission neu gestartet wird.

13. Kommunikationsverfahren nach einem der Ansprüche 9 bis 12, wobei, wenn keine Antwort von der externen Hochfrequenzvorrichtung erhalten wurde, ein Multiplikationsfaktor ρ der Dauer T0 des Abfragemodus zugewiesen wird, ehe die Hochfrequenzemission neu gestartet wird.

14. Kommunikationsverfahren nach einem der Ansprüche 9 bis 13 in Kombination mit einer Anordnung nach einem der Ansprüche 4 bis 8, wobei die Positionierung der externen Hochfrequenzvorrichtung gegenüber der mindestens einen optischen Anzeige ausgeführt wird.

15. Kommunikationsverfahren nach einem der Ansprüche 9 bis 14 in Kombination mit einer Anordnung nach einem der Ansprüche 4 bis 8, wobei, da die externe Hochfrequenzvorrichtung im linearen Polarisationsmodus ist, die Polarachse der Antenne der externen Hochfrequenzvorrichtung gemäß Informationen der mindestens einen optischen Anzeige ausgerichtet wird.

## Claims

1. Arrangement comprising a tyre casing (501), an electronic device (10) for measuring parameters of a mounted assembly and a bonding interface (2) made of elastomeric material at least partially covering the measuring electronic device (10) and serving as interface between the tyre casing (501) and the measuring electronic device (10), said measuring electronic device (10) comprising:

   - a UHF radiofrequency antenna (20) defining a polar axis (21); and
   - a circuit board (40) comprising:

      - an electronic chip (41) electrically coupled to the UHF radiofrequency antenna (20) by at least one galvanic transmission line (22); and
      - at least one sensor (45) for measuring a parameter of the mounted assembly;

   said tyre casing (501) comprising:

      - a crown (S), two sidewalls (F) and two beads (B) of revolution about a reference axis (601) defining a first surface (514) located externally and a second surface (513) located internally to the tyre casing (501) with respect to the reference axis (601); and
      - a median plane (611) perpendicular to the reference axis (601) and equidistant from the two beads (B);

   **characterized in that** the bonding interface (2) is fastened in line with said crown (S) to the second surface (513) of the tyre casing (501) **and in that** at least one feed point defined as the intersection between the polar axis (21) and the at least one transmission line (22) is located axially in the central region of the crown (S) of the tyre casing (501).

2. Arrangement according to Claim 1, wherein the electronic device (10) comprises a ground plane (46) connected to the circuit board (40).

3. Arrangement according to any one of the preceding claims, wherein the at least one feed point is located in the median plane (611) of the tyre casing (501).

4. Arrangement according to any one of Claims 1 to 3, wherein, the tyre casing (501) comprising at least one visual indicator located on the first surface (514) of the tyre casing (501) in line with one of the sidewalls (F), the bonding interface (2) is located at an azimuth separated from the azimuth of the at least one visual indicator by less than 15 degrees, and preferably less than 5 degrees.

5. Arrangement according to Claim 4, wherein the azimuth of the bonding interface (2) is superposed on the azimuth of the at least one visual indicator.

6. Arrangement according to any one of the preceding claims, wherein the UHF radiofrequency antenna (20) is a single-band half-wave dipole antenna, the total length L of which is comprised between the following limits:

$$0.9*C/(2*f) < L < 1.1*C/(2*f),$$

in which, C is the speed of the radiofrequency waves in the medium in which the UHF radiofrequency antenna (20) is embedded and f is the communication frequency of the UHF radiofrequency antenna (20).

7. Arrangement according to any one of Claims 1 to 6, wherein the polar axis of the UHF radiofrequency antenna (20) is parallel to the circumferential direction of the tyre casing (501).

8. Arrangement according to one of Claims 1 to 6, wherein the polar axis of the UHF radiofrequency antenna (20) is parallel to the reference axis (601) of the tyre casing (501).

9. Method for achieving communication between a mounted assembly and an external radiofrequency device comprising a radiofrequency antenna having a polar axis, said mounted assembly comprising an arrangement according to one of Claims 1 to 8, comprising the following steps:

   - positioning the external radiofrequency device radially at a radial distance R, with respect to the reference axis (601), comprised between one third and all of the height of the tyre casing (501);
   - bringing axially, in line with one of the sidewalls (F) of the tyre casing (501), the polar axis of the radiofrequency antenna of the external radiofrequency device to a distance D0, with respect to the first surface (514) of the tyre casing (501) of the mounted assembly, defining a first read position; and
   - transmitting a radiofrequency transmission with the external radiofrequency device for a duration T0 while angularly scanning a first angular sector β of α degrees.

10. Communicating method according to Claim 9 wherein, if no response has been obtained by the external radiofrequency device, said external radiofrequency device is moved to a second position located at α degrees from the first position before restarting the radiofrequency transmission.

**11.** Communicating method according to either one of Claims 9 to 10, wherein, if no response has been obtained by the external radiofrequency device, the distance D0 between the polar axis of the antenna of the external radiofrequency device and the first surface (514) of the tyre casing (501) is decreased by a factor $\gamma$ before the radiofrequency transmission is restarted.

**12.** Communicating method according to any one of Claims 9 to 11, wherein, if no response has been obtained by the external radiofrequency device, the angle $\alpha$ of the scanned first angular sector $\beta$ is decreased by a factor $\mu$ before the radiofrequency transmission is restarted.

**13.** Communicating method according to any one of Claims 9 to 12, wherein, if no response has been obtained by the external radiofrequency device, the duration T0 of the interrogation mode is multiplied by a factor $\rho$ before the radiofrequency transmission is restarted.

**14.** Communicating method according to any one of Claims 9 to 13 in combination with an arrangement according to one of Claims 4 to 8, wherein the external radiofrequency device is positioned in line with the at least one visual indicator.

**15.** Communicating method according to any one of Claims 9 to 14 in combination with an arrangement according to one of Claims 4 to 8, wherein the external radiofrequency device being in linear polarization mode, the polar axis of the antenna of the external radiofrequency device is oriented depending on information of the at least one visual indicator.

**FIG. 1**

**FIG. 2**

FIG. 3

**FIG. 4**

**FIG. 5**

*Position du dispositif RF externe*

*Mode d'interrogation radiofréquence*

Positionner Radialement
Entre le tiers et la hauteur de l'enveloppe
Par rapport à l'axe de référence

1001

Positionner Axialement le dispositif
radiofréquence externe à une distance $D_0$

1002

Positionner Angulairement le dispositif
radiofréquence externe à une première
position

1003

**Choix du mode de polarisation:
linéaire / circulaire**

2001

Lancement de l'émission RF pour une durée $T_0$

3001

Balayer angulairement un secteur β de α
degrés

3002

Réception des ondes RF

3003

Arrêt de l'émission au terme d'une durée $T_0$

3004

Déplacement angulaire
de α degrés

4102

Facteur multiplicateur ρ
sur la durée $T_0$

4301

Facteur réducteur ρ sur
la distance $D_0$

4101

Facteur réducteur μ sur
l'angle de balayage α

4302

OUI / NON

Fin du processus

5001

**FIG. 6**